Europäisches Patentamt

European Patent Office

Office européen des brevets

(19)

(11) Publication number: **0 257 603**
**A2**

(12) **EUROPEAN PATENT APPLICATION**

(21) Application number: **87112238.8**

(22) Date of filing: **24.08.87**

(51) Int. Cl.⁴: **G01N 27/90**

(30) Priority: **27.08.86 SE 8603604**

(43) Date of publication of application:
**02.03.88 Bulletin 88/09**

(84) Designated Contracting States:
**BE DE FR GB IT**

(71) Applicant: **TÖRNBLOMS KVALITETSKONTROLL AB**

**S-725 90 Västeras(SE)**

(72) Inventor: **Törnblom, Bengt Hjalmar
Vikhus Rytterne
S-725 90 Västeras(SE)**

(74) Representative: **Boecker, Joachim, Dr.-Ing.
Rathenauplatz 2-8
D-6000 Frankfurt a.M. 1(DE)**

(54) **Device for eddy current testing of non-magnetic test objects.**

(57) Device for eddy current testing of non-magnetic test objects (1), for example crack detection on hot continuously cast billets, for detecting and suppressing the influence of disturbing magnetic regions and/or magnetic material, such as cold oxide scales (2). The device comprises at least one transducer (3) adapted to move relative to the test object, with at least one detector (6) associated with the transducer, and serving to detect the possible presence of disturbing magnetic regions and/or material. At least one blocking circuit (7) is provided, controlled by the detector (6), for suppressing signals originating from a fault vector (FV), for example a crack signal. According to the invention also the magnetic regions and/or the magnetic material are/is adapted to be detected via eddy current technique, and the signals originating from a $\mu$-vector are adapted to be separated from signals originating from a fault vector.

FIG. 4

## Device for eddy current testing of non-magnetic test objects

The invention relates to a device for eddy current testing of non-magnetic test objects according to the precharacterising part of Claim 1. The device may be employed, among other things, in the field of control and/or supervision.

The fact that the magnetic permeability gives rise to disturbing vectors of varying magnitudes, when the value $\mu_r$ of the relative magnetic permeability is greater than 1 has long been a well-known problem in eddy current testing of non-magnetic materials/test objects. Heretofore, various attempts have been made to remove, for example, magnetic oxide scales and the like from test objects by flushing, for example the hot billet surface, with water under high pressure, which is both expensive and time-consuming and sometimes inefficient.

It would, of course, also be possible to measure the surface temperature of the billet by means of, for example, radiation pyrometers and the like, and thereby to determine whether the material is magnetic or not. However, for reasons which are easily understood, this method suffers from several and considerable drawbacks.

In eddy current testing, for example crack detection, of non-magnetic material, it is assumed that the magnetic permeability in the material is no greater than 1, i.e. that the test object is fully non-magnetic. By non-magnetic material are meant, for example, steel ingots such as slabs, billets, etc., the temperature of which at the time of measuring lies above the Curie temperature or Curie point. As virtually non-magnetic is also considered a magnetic steel tube which, by conventional saturating magnetization, has assumed an actual permeability largely corresponding to $\mu_o$. In all these cases it may occur that foreign magnetic particles and the like are present in or on the material, or that, for example, a certain limited spot on a hot billet surface has become magnetic because of a partially low surface temperature.

In continuous casting processes, the temperature of the strand may vary owing to different process parameters, which are changed during a continuing casting process. In this case, the billet surface is often coated with larger and smaller so-called oxide scales, the Curie temperature of which is often somewhat lower than that of the steel itself. Nevertheless it may happen that the oxide scales, which contain FeO, $Fe_2O_3$ and $Fe_3O_4$, because of deficient mechanical contact with the billet surface sometimes attain a temperature below their Curie temperature, whereby they become magnetic and thus greatly disturbing for the eddy current testing.

It is important to note in this connection that no matter what the reason for the presence of magnetic material in or on the test object, it is without exception disturbing in view of eddy current testing adapted to non-magnetic test objects, and particularly in case of the so-called multifrequency testing.

The invention aims at developing a device of the above-mentioned kind which is capable of detecting the presence of magnetic material in or on the test object and to give warning of its presence and effects, in order thus to be able to avoid that the magnetic disturbances are confused with actual cracks.

To achieve this aim the invention suggests a device according to the introductory part of Claim 1, which is characterized by the features of the characterizing part of Claim 1.

Further developments of the invention are characterized by the features of the additional claims.

The invention can, for example, be regarded as an important reliability-increasing complement, which warns of disturbing magnetic material, for example in the form of oxide scales, in connection with crack detection by means of eddy current technique on otherwise preferably non-magnetic test objects.

The invention enables, for example, the combination of detection of cracks and detection of magnetic material by means of, for example, the same eddy current transducer. Also, certain parts of the electronic measuring equipment may be used in common. This entails advantages both from the view point of economy and from the view point of measuring technique.

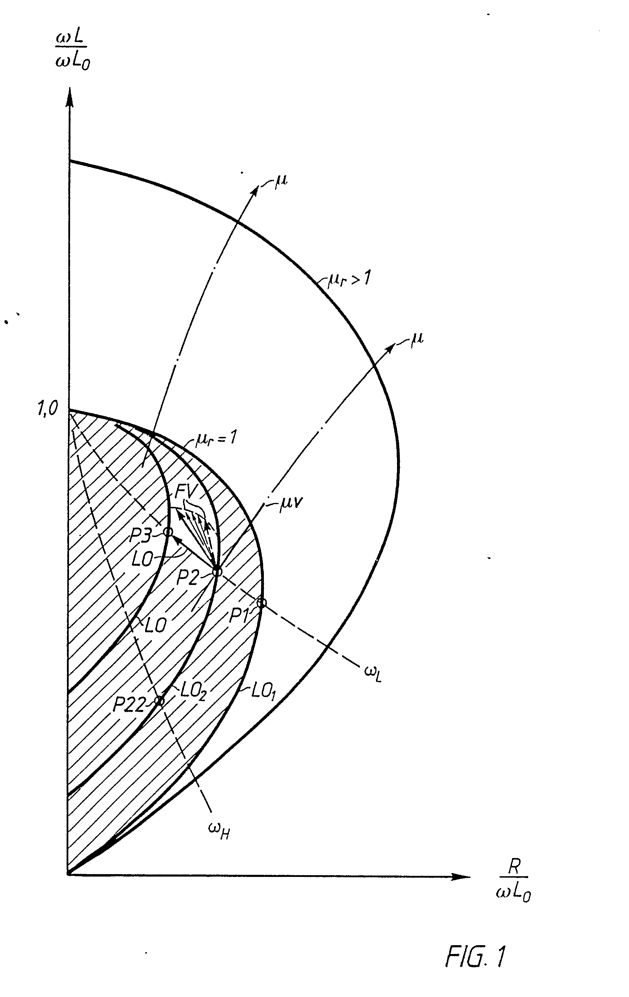

As far as is known, the existing specialist literature does not describe any method or device corresponding to the underlying idea of the device according to the invention. This idea consists in first to detect the magnetic material and then to alert and control the crack detection. Although much of what is shown in the impedance diagram in Figure 1 is known to the expert, seemingly nobody has attempted to or succeeded in drawing the conclusions which form the basis of the present invention.

The invention can be regarded as an important complement to the following Swedish patents or patent applications: 7507857-6, 7613708-2 (corresponding to DE-A-2825004), 7813344-4 (corresponding to DE-A-2952129), 8206678-8 (corresponding to EP-A-83903839.5, 8302738-3 (corresponding to PCT-application PCT/SE84/00175), 8400698-0 (corresponding to EP-A-85101296.3), 8400861-4 (corresponding to EP-A-85101525.5), 8601785-2, 8603113-5, and 8603240-6. The terminology and the drawings used in these patents and applications are also applicable, in parts, to the present invention.

In a preferred embodiment, at least one quantity, for example a cold oxide scale and/or a combination of quantities, for example a crack in an oscillation mark, as a function of a comparison of signals originating from at least two transformation blocks and/or normalization settings, are adapted to be separated.

Since the majority of the above-mentioned patent documents relate to crack detection on hot, non-magnetic material, magnetic disturbance may be expected to arise, which justifies a complement as provided by the present invention.

For better understanding of the invention a few definitions may be given:

By "eddy current testing" is meant control and/or measurement based on the use of frequencies and/or frequency components within the region of from a few Hz to several MHz, and whatever the expert includes in this concept.

By "frequency" is meant in certain cases "carrier frequency", in other words, that frequency with which the transducer/sensor is supplied. The term "frequency" also comprises a frequency component.

By "test object" are meant, for example, continuously cast billets, rods, tubes, sheets, liquid molten steel, etc.. The term "test object" also comprises particles and objects on the surface of the test object, for example oxide scales and the like.

By "transducer/sensor" is meant, for example, a surface transducer coil supplied with current, which coil moves, for example, in planes parallel to the surface of the test object or part of that surface.

By "lift-off" (LO) is meant the distance of the transducer/sensor relative to the surface of the test object. (See also the above-mentioned patents/applications.)

By "magnetic material" is meant that the material is influenced by a permanent magnet, i.e. that the relative permeability $\mu_r$ is greater than 1.

By "fault vector" (FV) is meant the vector in the impedance plane of the transducer/sensor which is caused, for example, by a crack (for example, as shown in Figure 1).

By "$\mu$-vector" ($\mu$V) is meant that vector which is caused by the magnetic material (for example, as shown in Figure 1).

By "vector lobe" (VL) is meant that area in the impedance plane within which fault vectors (due to varying depths and vertical positions of cracks) are situated.

The following detailed description of the invention is to be considered as one of many other feasible examples and variants.

To begin with, it should be pointed out that the following description assumes that the reader has a certain basic knowledge of understanding impedance diagrams, etc., and therefore the more elementary bases and details have been omitted in order to render the description more readily available. To restrict the scope of the description, an application of the invention will be described in which the device is based on eddy current technique. However, also other techniques, for example leakage fluxes, as well as the use of sensors of the Hall element type, and so on, are comprised by the invention.

The invention will now be described in greater detail with reference to the accompanying drawings showing - by way of example - in

Figure 1 a normalized impedance diagram for a conventional transducer/sensor,

Figures 2 and 3 separate vector lobes,

Figures 4 and 5 transducer locations according to the invention.

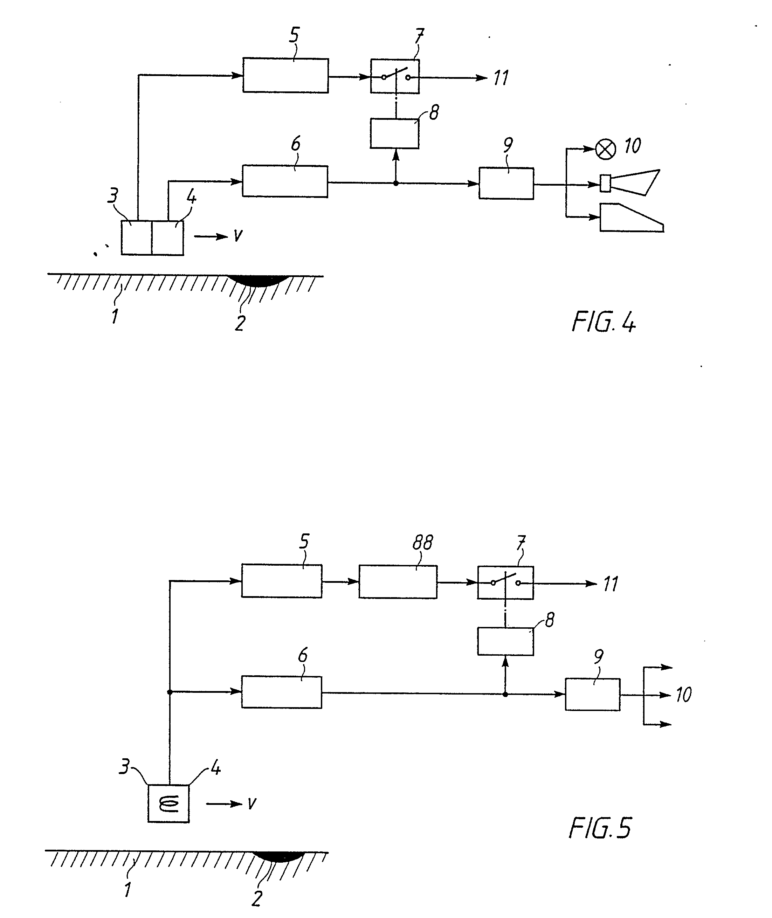

Figure 1 shows a normalized impedance diagram of conventional character, for a transducer/sensor. The above-mentioned SE-A-8302738-3 shows in Figure 3 a corresponding impedance diagram in the case of a non-magnetic material/test object, i.e. the impedance curves are based on $\omega L/\omega L_0 = 1.0$. In Figure 1 of this application, however, the impedance plane has been supplemented with curves for a magnetic material, in other words, for a material with $\mu_r > 1$. This relative permeability $\mu_r > 1$, has an amplification effect on the electric impedance, which may be greatly disturbing for the eddy current measurement of cracks etc., especially when the cracks are characterized in the impedance plane by a direction which largely coincides with the $\mu$-direction. The magnetic permeability has a direction in the impedance plane as is clear from the $\mu$-vectors and the dot-dashed lines in Figure 1.

In, for example, crack detection on hot ( > 780°) steel ingots, the temperature of which exceeds the Curie temperature, the steel is non-magnetic. If a simple surface transducer is used for crack detection, variations in the distance of the transducer to the billet surface, for example between $LO_2$ and $LO_3$, result in variations of the impedance of the transducer. This impedance variation is of different magnitude at different carrier frequencies, and for a certain frequency, $\omega_L$ in Figure 1, it is shown as a vector LO between points P2 and P3. Depending on the direction of the LO-movement, this vector may reverse its direction, i.e. change polarity.

The LO₁-curve in Figure 1 represents a strong inductive coupling between the transducer and the test object, for example obtained by direct contact between transducer and test object, i.e. LO = O. It is also possible, for example, to define the LO₁-curve as the smallest LO-distance which is possible or allowed in practice. For the non-magnetic material, this then means that the impedance curves are contained within the hatched area of Figure 1.

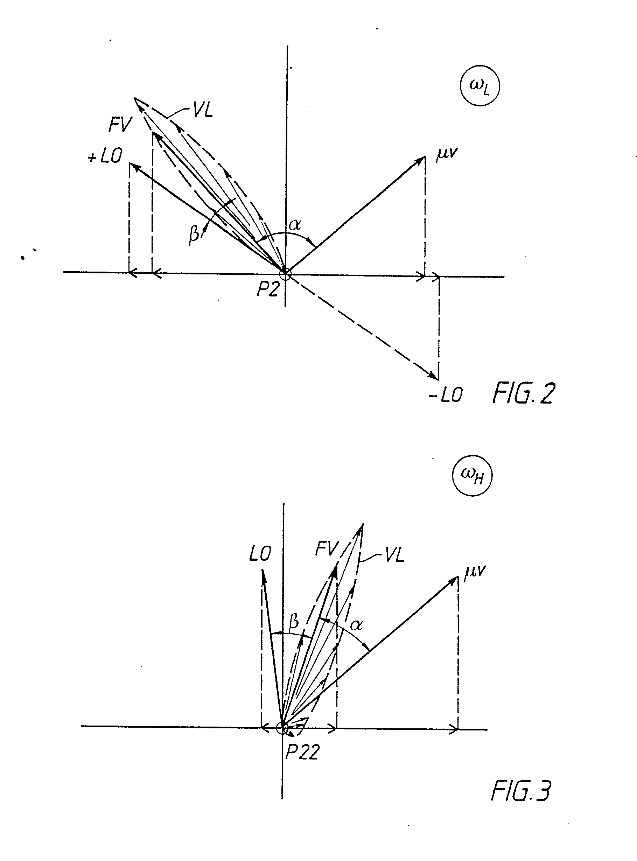

Now, let it be assumed that the transducer be at the distance $LO_2$ from the surface of the test object and that the carrier frequency $\omega_L$ be studied. This means that the working point is positioned P2 in Figure 1. When the transducer is positioned over a crack, a so-called fault vector (FV) appears, the direction of which lies near the LO-direction, which is described in detail in the above-mentioned SE-A-8302738-3. Now, if the test object for some reason should become magnetic, i.e. $\mu_r > 1$, a vector would be obtained in a corresponding manner, which in Figure 1 is shown as a vector $\mu V$. It should be pointed out here that the vec tors FV and $\mu V$ after detection have different signal frequency contents, i.e. different duration, which is due to the fact that the crack has an appearance which is different from (shorter than), for example, the magnetic region on the test object, which may be a larger oxide scale. These vectors, which are often of a differential nature, have, for two different carrier frequencies, $\omega_L$ and $\omega_H$, been broken out of Figure 1 and plotted graphically in Figures 2 and 3. These vectors can be conventionally transformed into, for example, voltages, which may be rectified via, for example, phase-controlled rectifiers. In this way, it is possible to separate vectors having different directions, i.e. different phase positions, in the impedance diagram.

When using the term vector, this is often understood to represent a signal, for example an alternating voltage, the phase position of which represents the direction of the vector and the amplitude of which corresponds to the magnitude of the vector.

In Figures 2 and 3 the three so-called vector lobes (VL) have been indicated by dashed lines. These lobes indicate the limiting surface within which fault vectors from cracks of a varying depth and vertical position are located. In the case of unusually large cracks, the length of the lobe may be greater.

Especially in the case of lower frequencies, $\omega_L$, for example < 100 KHz, the angle $\alpha$ between FV and $\mu V$ is close to 90°, whereas, on the other hand, at higher frequencies $\omega_H$, for example 1 MHz, the angle $\alpha$ is distinctly smaller than 90°. From the point of view of phase discrimination, of course, it is advantageous if the angle $\alpha$ is great, for example 90°, if it is desired, as in the present case, to separate $\mu V$ from FV.

From Figure 3 it is clear that the lower right hand part of the vector lobe VL intersects the $\mu$-vector, $\mu V$. This part of the vector lobe usually represents cracks located somewhat deeper in the material, i.e. not open cracks. The consequence of this is that at higher frequencies there are cracks whose direction in the impedance diagram coincides with the $\mu$-direction. In other words, FV and $\mu V$ cannot be separated in a reliable manner using phase discrimination at higher frequencies. On the other hand, at a suitably selected low frequency, as in Figure 2, separating VL from $\mu V$, and inversely, does not present any problem, as in this case no intersection crossing occurs. As far as is known, this fact has not been made use of in prior art in order to increase the reliability in crack detection, as described in the present application.

As a first step towards a reliable separation of the $\mu$-vector from the other vectors, a suitable, often low frequency is chosen which enables separation of $\mu V$ from FV. As a second step, for example, the lift-off (LO) vector is to be suppressed. It is to be noted here that LO may change polarity, which in Figure 2 is marked by +LO and -LO, respectively. Therefore, if, as indicated in Figure 2, detection is carried out in a direction which is horizontal, the respective vector projection on the horizontal line will be approximately the same for $\mu V$ and -LO, which means that it is impossible in this way to separate $\mu V$ from -LO. On the other hand, as can be seen, at $\omega_L$ and horizontal projection of FV and $\mu V$, these can be separated from each other in an excellent way since the projections of FV and $\mu V$ have different signs, which are easily distinguished between by electronic means. At a sufficiently low frequency, where the angle $\alpha$ or the sum of the angles $\alpha$ and $\beta$ is of the order of magnitude of 90°, it is possible relatively efficiently to suppress the LO-influence by detecting the vectors largely perpendicular to the LO-direction or the FV-direc tion, depending on which of these is the most disturbing for the $\mu$-vector separation.

In the case of normal surface cracks, the angle $\beta$ is often < 18°, which means that also the fault vector is suppressed relatively well when detecting perpendicular to the LO-direction. Because of the somewhat incomplete suppression of FV, however, it may be justified to improve the suppression via a filtering method. To this end, the fact that the frequency contents in the detected/rectified fault vector FV is higher than the frequency contents in the corresponding $\mu$-vector signal and the LO-vector signal, is made use of. The filters for the respective vector types are therefore tuned to different signal frequencies, whereby they can be separated from each other in a better way. The reason for the different frequency contents is that cracks and the possible magnetic portions on/in the test object have different shape and extension causing the transducer being located over the crack and over the magnetic portions for different periods of time.

Since also the LO-signal differs with respect to frequency from other signals/vectors, also the LO-signal can be separated or suppressed further via a filter method, if required. Another method of suppressing or separating the LO-signal is via so-called vector transformation. In this case at least one LO-signal, or a part thereof, of a different carrier frequency origin is employed in order to compensate, for example by balancing away, the LO-vector or a part thereof. The same technique can also be employed for separation and suppressing of FV-signals and so on. The invention includes both separate and combined solutions of the principle mentioned here.

It should be observed that no matter what the solution looks like, at least one frequency must be chosen so low that the angle $\alpha$ is sufficiently large. Since the frequencies which are used for crack detection are normally relatively high, it is often justified to use at least one separate frequency for the magnetic detection, for example within the region of 1-10 KHz.

Regarding the choice of a suitable frequency for efficient $\mu$V-detection, it should also be known that the absolute value of the permeability decreases with increasing frequency because of the inherent inertia of the material with respect to rapid magnetic changes. It is thus advantageous from two points of view to choose a frequency working point on the upper part of the impedance plane: for one thing, $\mu$V will be stronger, and for another, $\alpha$ will be greater. The upper third part of the impedance curve is then a good choice.

To prevent $\mu$-vectors form being confused with fault vectors, it is advantageous to use the detected presence of magnetic material for automatically blocking the crack detection so that no false cracks are indicated. At the same time, some form of alarm should be given, for example automatically, in order to draw the attention of the user to the fact that the crack detector has been temporarily blocked or temporarily performs unreliable because of magnetic disturbance.

The presence of magnetic material can also be used as an indication that something is wrong in the process, for example that the cooling is too heavy in a continuous casting machine. When alarm is given indicating the presence of magnetic material, it is also possible - for example, automatically and temporarily - to activate devices for the removal of oxide scales and the like.

In certain cases, it may be desirable that alarm is given when the permeability level exceeds a certain set threshold value. For that reason, the permeability signal should be largely constant within the LO operating range of the transducer. This can be achieved by signal processing, for example amplifying, the $\mu$-signal as a function of the LO-signal.

In those cases where the same transducer is used both for detection of cracks and of magnetic material, the following advantages, inter alia, may be obtained: The measurement takes place at the same time on the same surface part, so the measured values are the current ones and are related to each other. The permeability dependence of the crack detection is nearly exactly indicated because the same transducer is used for both measurements. The transducer arrangement is, of course, simpler and less expensive.

In crack detection, some form of so-called transducer manipulator is often used to move the transducer/sensor over, for example, the hot steel strand. The transducer may also consist of a so-called "whirligig", i.e. have a rotary path superimposed on the slower manipulator movement. The present invention comprises those cases where the transducers for detecting cracks and magnetically disturbing material are placed on/in the same manipulator arrangement, which has several advantages. In this way, the crack detector can be blocked to an optimum extent, i.e. to a sufficient extent and for an adequate period of time, since the information about the magnetic presence is both up-to-date and exact.

To illustrate how the crack detector and the magnet detector/$\mu$-detector can cooperate, two largely equivalent block diagrams have been drawn, which is clear from Figures 4 and 5. The test object 1 contains a magnetic oxide scale flake 2. The transducers 3 and 4, which in Figure 5 consist of a common surface transducer coil, move over the surface of the test object 1. The transducers, which move at the velocity v m/s, consist of one crack transducer 3 and one transducer for $\mu$-detection 4. The transducers are connected to a crack detector 5 and a $\mu$-detector 6. The crack detector 5 is connected to a blocking circuit 7, from which crack signals can be obtained at the output 11. In Figure 5 the crack signal also passes through a delay circuit 88. The output signal from the $\mu$-detector 6 controls the blocking circuit 7 via the timing circuit 8, which may, for example, extend the control signal from the $\mu$-detector 6 so as to obtain an optimum blocking. Different types of alarm signals 10 are given via the alarm block 10. A particularly good feature is to locate the transducer 4 immediately in front of the crack transducer 3 since in this way the crack detector 5 is blocked just before the crack transducer 3 reaches the disturbing region 2. The same result is attained if, as shown in Figure 5, the crack signal is delayed in the delay circuit 88, which may consist of an analog shift register or the like. This delay makes it possible for the false crack signal, which has arisen as a result of the magnetic material, to be blocked in a reliable manner by the signal from the $\mu$-detector 6. Because of the delay in 88 the signal from the detector 6 should be extended via the timing circuit 8, for example by a time somewhat longer than the delay time in 88.

The invention is also characterized in that information 10 about the presence of a magnetic material is used to activate and/or control, for example, a separate device for the removal and/or elimination of the magnetic material and/or its effects on, for example, the crack detection.

The scope of the invention may include a device, for example controlled via a signal 10, for eliminating completely or partially the magnetic properties of oxide scales and the like on, for example, hot test objects, by heating the oxide scales to a temperature corresponding at least to their Curie temperature, which renders the oxide scales largely non-magnetic. This heating can, for example, be materialized in that the oxide scales are heated up by at least one gas burner or gas flame. Another way is to heat up the oxide scales by means of an inductive heating device. The heating device may advantageously be mounted on or adjacent to the transducer manipulator or transducer of the measuring and/or control device. The heating is activated, for example, when the $\mu$-detector shows that the oxide scales are or tend to become magnetic. In this way, the heating can take place selectively in places where oxide scales and the like have been established to be or to become magnetic. By locating the transducers/sensors for crack detection and $\mu$-detection and the heating device on the same movable foundation/device connected to, for example, a billets strand, for example on a cross travel carriage, a financially attractive overall solution is obtained.

In summary, the invention comprises providing, for example, a conventional eddy current based crack detecting equipment, which is adapted to preferably non-magnetic test objects, with or allowing it to cooperate with a device which detects - for example, advantageously via eddy current technique - the presence of disturbing magnetic material, for example cold magnetic oxide scales, in and/or on the test object in order thus to monitor, for example, that disturbances, i.e. so-called false cracks originating from magnetic material, are not confused with actual cracks and similar surface defects.

In order to avoid that too large surfaces remain uncontrolled because of magnetic disturbances, the device can be provided with, for example, a heating device in order to eliminate primarily the magnetic properties of the oxide scales.

The notion $\mu$-detection, of course, also comprises detection of magnetic material in/on the test-object or its surface.

The invention can be varied in many ways within the scope of the appended claims.

## Claims

1. Device for eddy current testing of non-magnetic test objects (1), for example crack detection on hot continuously cast billets, for detecting and suppressing the influence of disturbing magnetic regions and/or magnetic material, such as cold oxide scales (2), with at least one transducer/sensor (3) adapted to move relative to the test object, with at least one detector (6) associated with the transducer/sensor, and serving to detect the possible presence of disturbing magnetic regions and/or material, and with at least one blocking circuit (7), directly or indirectly controlled by the detector (6), for suppressing signals originating from a fault vector (FV), for example a crack signal, **characterized** in that also the magnetic regions and/or the magnetic material are/is adapted to be detected via eddy current technique, and the signals originating from a $\mu$-vector are adapted to be separated from signals originating from a fault vector.

2. Device according to Claim 1, **characterized** in that the magnetic properties of the magnetic regions and/or the magnetic material are completely or partially measured and/or controlled, directly or indirectly, as a function of the electric impedance and/or impedance variation of the transducer/sensor.

3. Device according to any of the preceding Claims, **characterized** in that at least one transducer/sensor is used for crack detection and for control and/or measurement of magnetic properties.

4. Device according to any of the preceding Claims, **characterized** in that at least one carrier frequency is so chosen that the $\mu$-vector, or its direction, does not cross the vector lobe, VL, whereby at least one signal, di rectly or indirectly originating from the $\mu$-vector, can be separated from the majority of signals, directly or indirectly originating from the fault vector, FV.

5. Device according to any of the preceding Claims, **characterized** in that at least one signal, directly or indirectly originating from a μ-vector, μV, is signal-processed, for example amplified, as a function of the distance (lift-off) of the transducer/sensor to the surface of the test object.

6. Device according to any of the preceding Claims, **characterized** in that the dependence on the lift-off, LO, and/or a varying lift-off, is suppressed, completely or partially, by means of detection, for example rectifying, using phase controlled rectifiers in a direction in the impedance plane of the transducer which is largely perpendicular to the lift-off direction or the fault vector direction, or a direction therebetween.

7. Device according to any of the preceding Claims, **characterized** in that a signal, directly or indirectly originating from a μ-vector, μV, is filtered by means of a filter tuned to a different frequency than the filters which are used for filtering a signal, directly or indirectly originating form a fault vector, FV.

8. Device according to any of the preceding Claims, **characterized** in that a signal, directly or indirectly originating from a μ-vector, μV, is rectified by means of phase controlled rectifiers, the control phase/control signal of which has been chosen such that the fault vector, FV, and the μ-vector, μV, are detected with different polarities/signs.

9. Device according to any of the preceding Claims, **characterized** in that at least one signal, representing the detected μ-vector, μV, is used for automatically, for example temporarily, blocking the crack detector portion/device.

10. Device according to any of the preceding Claims, **characterized** in that information about the presence of a magnetic material is used for activating and/or controlling the removal and/or elimination of the magnetic material, for example by means of brushing, air clearing, heating, etc.

11. Device according to any of the preceding Claims, **characterized** in that an alarm, for example a sound signal, a light signal, a printout of alarm, or the like, is actuated upon a detected presence of a magnetic material in/or the test object.

12. Device according to any of the preceding Claims, **characterized** in that it comprises the use of a socalled vector transformation, for example for suppressing the lift-off dependence, etc.

13. Device according to any of the preceding Claims, **characterized** in that at least one quantity, for example cold oxide scales, and/or a combination of quantities, are adapted to be separated, for example blocked or suppressed, from/relative to at least one other quantity, for example a surface crack, and/or a combination of quantities, for example a crack in an oscillation mark, as a function of a comparison of signals (S1,S2) originating from at least two transformation blocks and/or normalization settings.

14. Device according to Claim 13, **characterized** in that the comparison is adapted to be supplemented by, or is carried out in combination with, conditions, for example discriminating function blocks built up of AND-gates, OR-gates, comparators, and the like.

15. Device according to any of the preceding Claims, **characterized** in that the transformation blocks are substantially similarly constructed but differently set/normalized, for example set for suppression of oscillation marks and cold oxide scales, respectively.

16. Device according to any of the preceding Claims, **characterized** in that only two signals (H1,L1) are used per transformation block.

17. Device according to any of the preceding Claims, **characterized** in that at least two identical and/or similar input signals (H1,L1) are used in at least two transformation complexes.

18. Devise according to any of the preceding Claims, **characterized** in that at least one output signal (S1) from a transformation complex is signal processed, for example rectified, so that disturbing irregularities can be suppressed.

19. Device according to any of the preceding Claims, **characterized** in that the device is used integral with and/or in combination with a measuring and/or control device, for example an eddy current based crack detection equipment.

20. Device according to any of the preceding Claims, **characterized** in that at least one signal, representing a certain quantity, for example cold oxide scales, or a combination of quantities, are used for controlling, for example automatically separating or suppressing, at least one signal path, for example for temporarily/instantaneously blocking the crack detector portion/device so that so-called false crack signals are not indicated because of the presence of cold oxide scales.

21. Device according to any of the preceding Claims, **characterized** in that normalization and/or balancing of at least one transformation complex and/or comparison complex are carried out with only one potentiometer, the movable centre tap of which is directly or indirectly connected to zero potential and/or to the chassis.

22. Device according to any of the preceding Claims, **characterized** in that at least one special potentiometer is used for balancing transducer complex output signals (S1,S2) in relation to each other.

August 12, 1987
21 921 PE

FIG. 1

August 12, 1987

21 921 PE

FIG.2

FIG.3

August 12, 1997
21 921 PE

FIG. 4

FIG.5